(19) Europäisches Patentamt
European Patent Office
Office européen des brevets

(11) **EP 4 773 464 A1**

(12) **EUROPEAN PATENT APPLICATION**
published in accordance with Art. 153(4) EPC

(43) Date of publication:
**08.07.2026  Bulletin 2026/28**

(21) Application number: **24859199.2**

(22) Date of filing: **16.07.2024**

(51) International Patent Classification (IPC):
**H02J 7/02** (2016.01)     **H01M 10/44** (2006.01)
**H01M 10/48** (2006.01)

(52) Cooperative Patent Classification (CPC):
**H01M 10/44; H01M 10/48; H02J 7/02;** Y02E 60/10

(86) International application number:
**PCT/JP2024/025504**

(87) International publication number:
**WO 2025/047155 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **28.08.2023   JP 2023137879**

(71) Applicant: **Panasonic Intellectual Property Management Co., Ltd.**
**Kadoma-shi, Osaka 571-0057 (JP)**

(72) Inventors:
• **TADOKORO, Yoshikazu**
  **Kadoma-shi, Osaka 571-0057 (JP)**
• **OKUMURA, Masashi**
  **Kadoma-shi, Osaka 571-0057 (JP)**

(74) Representative: **Novagraaf International SA**
**Chemin de l'Echo 3**
**1213 Onex, Geneva (CH)**

(54) **BATTERY MANAGEMENT DEVICE, BATTERY SYSTEM, BATTERY MANAGEMENT METHOD, AND BATTERY MANAGEMENT PROGRAM**

(57)     A measurement circuit is connected, with plural voltage measurement lines, to respective nodes of cells connected in series to one another and is configured to measure respective voltages across the cells. Each discharge circuit is connected to corresponding two adjacent voltage measurement lines of the plural voltage measurement lines and is configured to be connected in parallel to a corresponding cell of the cells. A control circuit is configured to execute a balancing process of balancing the cells by controlling each discharge circuit based on the respective voltages across the cells measured by the measurement circuit. The control circuit is configured to execute the balancing process when a variation of the respective voltages across the cells exceeds a first threshold. The control circuit is configured to determine that an error occurs when the variation of the respective voltages across the cells exceeds a second threshold obtained by adding an offset value to the first threshold.

FIG. 3

```
                    ┌──────────┐
                    │   Start  │
                    └────┬─────┘
                         │
         S10  ┌──────────────────────┐
              │ Measure Voltages of  │
              │        Cells         │
              └──────────┬───────────┘
                         │
         S11  ┌──────────────────────┐
              │ Calculate Voltage    │
              │ Difference ΔV        │
              │ Between Cells        │
              └──────────┬───────────┘
                    S12  │
                    ◇ ΔV>x ◇────N───┐
                         │Y          │
         S13  ┌──────────────────────┐│
              │ Execute Balancing    ││
              │      Process         ││
              └──────────┬───────────┘│
                    S14  │◄───────────┘
              N     ◇ ΔV>(x+y) ◇
                         │Y
         S15  ┌──────────────────────┐
              │ Stop Charging and    │
              │ Discharging          │
              │ Notice Error         │
              └──────────┬───────────┘
                    ┌──────────────┐
                    │Repair, Replace│
                    └──────────────┘
```

EP 4 773 464 A1

**Description**

TECHNICAL FIELD

The present disclosure relates to a battery management device, a battery system, a battery management method, and a battery management program, for detecting hazardous events in cells.

BACKGROUND ART

While lithium dendrites in a lithium-ion battery cell grow, a short-circuit occurs between a positive electrode and a negative electrode when the lithium dendrites penetrate a separator. Upon further growing and penetrating the separator more, the lithium dendrites facilitate the short-circuit between the positive electrode and the negative electrode. The short-circuit worsening decreases an internal resistance of the cell, and increases the risk of causing ignition or fuming in the lithium-ion battery cell.

Regarding the detection of micro short-circuit in lithium-ion battery cells, PTL 1 discloses a method in which an average voltage of cells connected in series to one another and a cell voltage of the detection target cell are calculated at first and second time points to determine as abnormal when a difference between the voltage differences at the time points is higher than or equal to a threshold.

CITATION LIST

Patent Literature

PTL 1: International Publication No. 20/021889

SUMMARY

In order to eliminate a variation of respective voltages across cells connected in series to one another, a battery system may have a balancing function. The method of detecting a micro short-circuit based on an increase in the voltage difference between the cells needs to consider effects of decreasing the voltage difference between the cells due to the balancing process. The present inventors have developed a technique of detecting a sign of internal short-circuit in cells more easily than the conventional method.

A battery management device according to an aspect of the present disclosure includes: a measurement circuit connected, with a plurality of voltage measurement lines, to respective nodes of a plurality of cells connected in series to one another, the measurement circuit being configured to measure respective voltages across the plurality of cells; a plurality of discharge circuits, each of the plurality of discharge circuits being connected to corresponding two adjacent voltage measurement lines of the plurality of voltage measurement lines and being configured to be connected in parallel to a corresponding cell of the plurality of cells; and a control circuit configured to execute a balancing process of balancing the plurality of cells by controlling the plurality of discharge circuits based on the respective voltages across the plurality of cells measured by the measurement circuit. The control circuit is configured to: execute the balancing process when a variation of the respective voltages across the plurality of cells exceeds a first threshold; and determine that an error occurs when the variation of the respective voltages across the plurality of cells exceeds a second threshold obtained by adding an offset value to the first threshold.

Any combination of the above-described components, and any embodiment of the present disclosure implemented in various devices, systems, methods, and computer programs are also equally effective aspects of the present disclosure.

According to the present disclosure, it is possible to easily detect a sign of internal short-circuit in cells connected in series to one another.

BRIEF DESCRIPTION OF THE DRAWINGS

FIG. 1 illustrates a battery system according to an exemplary embodiment.
FIG. 2 schematically illustrates a relationship between a voltage drop rate in a balancing process and an increasing rate of a voltage difference between cells of the battery system according to the embodiment.
FIG. 3 is a flowchart illustrating a battery management method performed by a battery management device according to the embodiment.

EP 4 773 464 A1

DESCRIPTION OF EMBODIMENTS

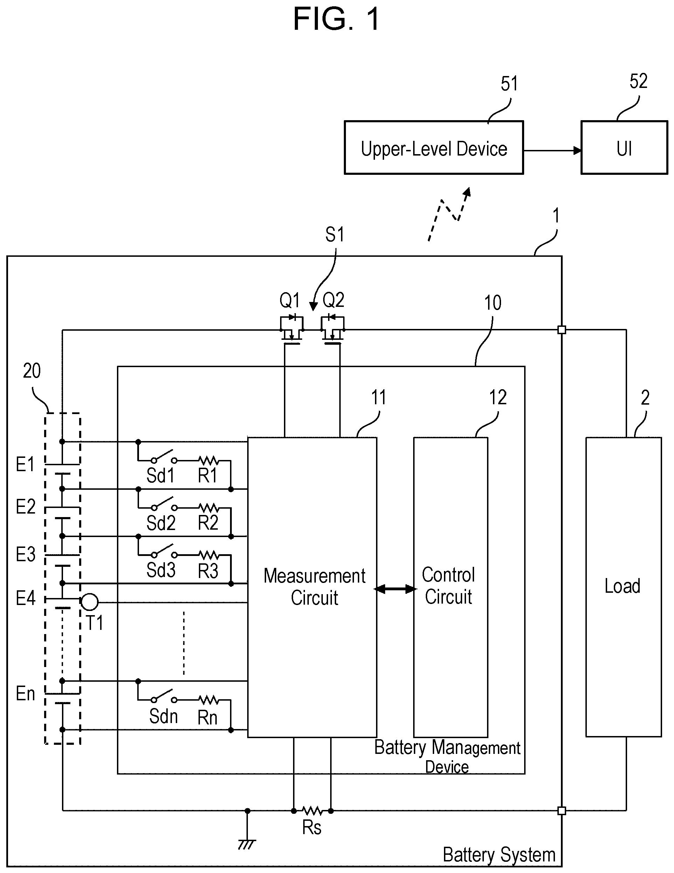

FIG. 1 illustrates battery system 1 according to an exemplary embodiment. Battery system 1 includes battery assembly 20 and battery management device 10. Battery assembly 20 includes cells E1-En connected in series to one another. The number of the cells connected in series is determined according to the specification of load 2. Each cell may be, e.g., a lithium-ion battery cell, a nickel-metal hydride battery cell, and a lead-acid cell. Hereinafter, the present description assumes an example employing a lithium-ion battery cell with a rated voltage of 3.6-3.7 V.

In battery system 1 according to the embodiment shown in FIG. 1, power line switch S1 configured to connect and disconnect between battery assembly 20 and load 2 is inserted in a power line connecting battery assembly 20 to load 2. In the example shown in FIG. 1, power line switch S1 includes first transistor Q1 and second transistor Q2 implemented by N-channel metal-oxide-semiconductor field-effect transistors (MOSFETs) inversely connected in series to each other. Each N-channel MOSFET includes a parasitic diode in a direction from the source to the drain of the MOSFET. Two N-channel MOSFETs inversely connected in series are configured to block an electric current flowing through the parasitic diode and constitute a bidirectional switch. In the example shown in FIG. 1, the turning off of first transistor Q1 blocks a discharging current from battery assembly 20, and the turning off of second transistor Q2 blocks a charging current to battery assembly 20.

In cases where battery system 1 according to the embodiment is used as an electricity storage system cooperating with a solar power generation system, load 2 is a direct-current (DC) bus. The DC bus is connected to a DC/DC converter for solar batteries or a DC end of an inverter connected to a commercial power utility grid. In cases where battery system 1 according to the embodiment is mounted in a vehicle, load 2 is an inverter and a motor, or a charger.

Battery management device 10 includes measurement circuit 11, discharge circuits, respectively, and control circuit 12. Each of the discharge circuits is configured to be connected in parallel to a corresponding one of cells E1-En. Measurement circuit 11 is composed of an analog front end (AFE) IC or an application specific integrated circuit (ASIC). Measurement circuit 11 is configured to be connected, with plural voltage measurement lines, to respective nodes of cells E1-En connected in series to one another, and to measure respective voltages across cells E1-En by measuring a voltage between two adjacent voltage measurement lines of the plural voltage measurement lines.

Each of the discharge circuits is connected between corresponding two adjacent voltage measurement lines of the plural voltage measurement lines. Specifically, first discharge switch Sd1 and first discharge resistor R1 are connected in series to each other across both ends of first cell E1, second discharge switch Sd2 and second discharge resistor R2 are connected in series to each other across both ends of second cell E2, third discharge switch Sd3 and third discharge resistor R3 are connected in series to each other across both ends of third cell E3, ..., and n-th discharge switch Sdn and n-th discharge resistor Rn are connected in series to each other across both ends of n-th cell En.

Measurement circuit 11 includes a multiplexer and an A/D converter. The multiplexer outputs the respective measurement voltages across cells E1-En to the A/D converter sequentially in a predetermined order. The A/D converter converts the analog measurement voltages input from the multiplexer into digital values. Measurement circuit 11 transmits the voltage values of cells E1-En, which have been converted into digital values, to control circuit 12 via a communication interface.

Measurement circuit 11 is configured to measure a current flowing through battery assembly 20. Shunt resistor Rs is connected to the power line connecting battery assembly 20 to load 2. As an example of a current measurement system, a differential amplifier amplifies a voltage across both ends of shunt resistor Rs and outputs the amplified voltage to the A/D converter of measurement circuit 11. The A/D converter converts an analog voltage indicating the current flowing through battery assembly 20, which is input from the differential amplifier, into a digital value. Measurement circuit 11 transmits the current value converted into the digital value to control circuit 12 via the communication interface. A Hall element may be used in place of shunt resistor Rs.

At least one thermistor T1 is provided on a surface of battery assembly 20. Thermistor T1 is a thermosensitive element having a resistance value changing according to temperature. A voltage divided by thermistor T1 and a voltage divider resistor is output to the A/D converter of measurement circuit 11. The A/D converter converts an analog voltage, which is input thereto, indicating a surface temperature of battery assembly 20, into a digital value. Measurement circuit 11 transmits the temperature value converted into the digital value to control circuit 12 via the communication interface. Thermistors T1 may be provided at plural locations on battery assembly 20. Another thermosensitive element, such as a thermocouple or platinum resistance thermometer, may be used in place of thermistor T1.

Control circuit 12 is configured to control battery system 1 based on the voltage value of each of cells E1-En, the current value flowing through battery assembly 20, and the temperature value of battery assembly 20, which are received from measurement circuit 11. Control circuit 12 includes a microcontroller, and the microcontroller executes a firmware program to thereby perform the following processes.

Controller 12 is configured to estimate a state of charge (SOC) by combining an open-circuit voltage (OCV) method and a current integration method. The OCV method is a method of estimating the SOC based on the OCV of the measured cell and a SOC-OCV curve of the cell. The SOC-OCV curve of the cell is previously prepared based on a characteristic test conducted by a battery manufacturer and is registered in control circuit 12 at the time of shipment.

The current integration method is a method of estimating the SOC based on the OCV of each cell at the start of charging and discharging and the integral value of the measured current. In the current integration method, measurement errors of current accumulate over time as the charge-discharge time becomes longer. For this reason, a weighted average of the SOC estimated by the current integration method and the SOC estimated by the OCV method may be preferably used.

Control circuit 12 may convert the SOCs of cells E1-En into actual capacities, combine the actual capacities to calculate the actual capacity of battery assembly 20, and estimate the SOC of battery assembly 20 based on the actual capacity and the current full charge capacity (FCC) of battery assembly 20.

Control circuit 12 may estimate the current FCC of battery assembly 20 by dividing the current integral value for depth of discharge (DOD). The DOD is defined by, for example, the difference between the SOC at the starting of charging and the SOC at the end of the charging. Control circuit 12 may estimate state of health (SOH) by dividing the current FCC by the initial FCC. The lower the value (the closer it is to 0%) of the SOH, the more the deterioration progresses.

Upon detecting one of the abnormalities of overcharge, overdischarge, overcurrent, and overtemperature, control circuit 12 transmits a cutoff signal for power line switch S1 to measurement circuit 11 so as to cause measurement circuit 11 to turn off power line switch S1.

Control circuit 12 is configured to execute a balancing process (i.e., cell balancing) of balancing cells E1-En by controlling the discharge circuits based on the respective voltages across cells E1-En measured by measurement circuit 11. In a common passive cell balancing technique, cells E1-En except a cell having the lowest voltage among the cells are discharged to a voltage (hereinafter referred to as "a target value") of the cell of cells E1-En which has the lowest voltage. The target value may be specified by a capacity, the SOC, a dischargeable amount, or a chargeable amount.

Control circuit 12 is configured to set the measured voltage value of the cell of cells E1-En which has the lowest voltage to the target value, and calculate a difference between the target value and each of the measured values of the other cells. Control circuit 12 calculates amounts of discharge for the other cells based on the calculated difference. Control circuit 12 calculates lengths of discharge time of the other cells based on the calculated amounts of discharge. Control circuit 12 generates a control signal for the balancing process that contains the lengths of time for discharging the cells and transmits the signal to measurement circuit 11. Based on the control signal received from control circuit 12, measurement circuit 11 controls discharge switches Qd1-Qdn to turn on discharge switches Qd1-Qdn for the respective lengths of time.

In the balancing process, the respective voltages across the cells other than the cell having the lowest voltage may be lowered to equalize the respective voltages across cells E1-En by passing electric current through discharge resistors R1-Rn which are connected in parallel to cells E1-En for respective lengths of time, respectively. Hereinafter, a voltage-drop rate in the balancing process is defined as $\alpha$ [mV/hour]. The voltage drop rate $\alpha$ is uniquely determined by circuit constants (such as the resistance values of discharge resistors R1-Rn) and the specifications of measurement circuit 11 and control circuit 12.

When an internal micro short-circuit occurs due to metal precipitation in a cell, the voltage of the cell with the micro short-circuit gradually drops due to leakage current in the cell, and impairs the voltage balance among cells E1-En. The voltage drop rate of the cell experiencing the micro short-circuit is defined as $\beta$ [mV/hour]. The widening rate of the difference of respective voltages across cells E1-En may also be defined as $\beta$ [mV/hour]. The widening rate $\beta$ gradually increases over time according to the progress of the internal micro short-circuit in the cell.

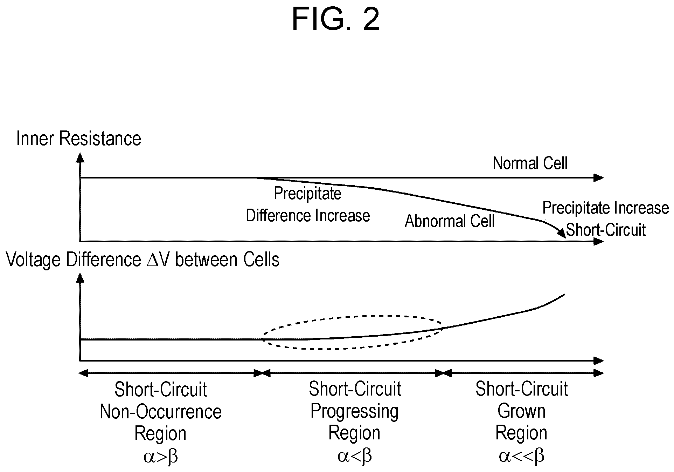

FIG. 2 is a graph schematically illustrating the relationship between voltage drop rate $\alpha$ in the balancing process and widening rate $\beta$ of the difference of respective voltages across cells E1-En. Voltage difference $\Delta V$ of respective voltages across cells E1-En is a value that indicates a variation of the respective voltages across cells E1-En, and is defined by the difference between the maximum voltage and the minimum voltage of the respective voltages across cells E1-En. Voltage difference $\Delta V$ of respective voltages across cells E1-En may be defined by the difference between the mean voltage value and the minimum voltage of the respective voltages across cells E1-En, or by the difference between the median voltage value and the minimum voltage of the respective voltages across cells E1-En. In the case that calculating the mean value or the median value of the respective voltages across cells E1-En, the value may be preferably calculated excluding the voltage of the cell with the minimum voltage.

At the time of shipment of battery system 1 with no internal micro short-circuit occurs in cells E1-En, the relation $\alpha > \beta$ holds. There is almost no difference in the internal resistances of cells E1-En, and voltage difference $\Delta V$ is small (short-circuit non-occurrence region in FIG. 2) accordingly.

Micro short-circuit may occur in some of the cells due to, for example, metallic foreign substance contamination, separator displacement, expansion of positive and negative electrodes, lithium deposition resulting from use under severe environments such as low temperature. The micro short-circuit causes a difference in the internal resistance of the abnormal cell experiencing the micro short-circuit, and increases the difference in internal resistances gradually. Accordingly, the rate $\beta$ gradually increases. When the condition $\alpha < \beta$ is met, the balancing process is no longer effective and voltage difference $\Delta V$ increases (short-circuit progressing region in FIG. 2).

As lithium dendrites further grow, developing from a high resistance short-circuit to a low resistance short-circuit, the condition α << β is met, causing a large short-circuit current to flow through the inside of the cell and increasing the risk of ignition or fuming (short-circuit grown region in FIG. 2).

The present embodiment introduces a mechanism of detecting a sign of increasing of voltage difference ΔV of the respective voltages across cells E1-En and stopping battery system 1 in the short-circuit progressing region (safe region in which the risk of ignition or fuming is low) before reaching the short-circuit grown region (dangerous region in which the risk of ignition or fuming is high).

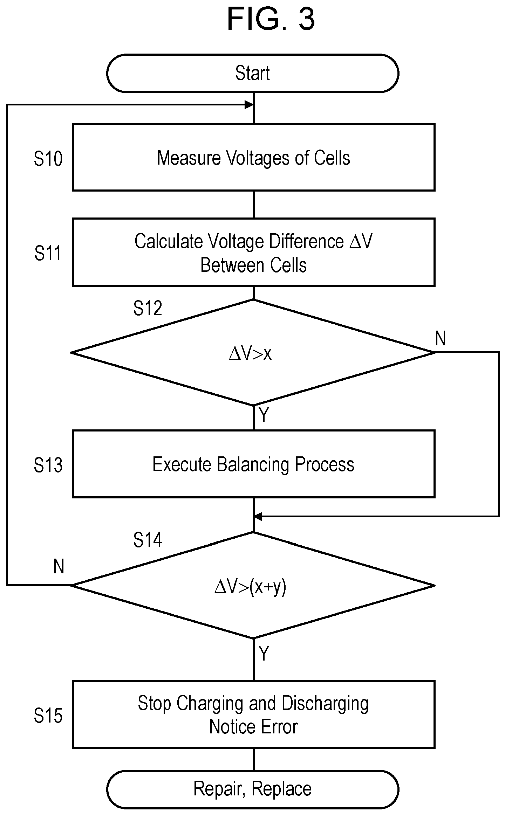

FIG. 3 is a flowchart illustrating a battery management method performed by battery management device 10 according to the embodiment. Measurement circuit 11 measures the respective voltages across cells E1-En (S10). Control circuit 12 calculates voltage difference ΔV of the measured voltages across cells E1-En (S11). Control circuit 12 compares voltage difference ΔV and a balancing-start threshold x (S12). Balancing-start threshold x may be set to a value ranging, for example, about from 10 mV to 30 mV.

If voltage difference ΔV exceeds balancing-start threshold x ("Y" in S12), control circuit 12 executes the balancing process (S13). If voltage difference ΔV is less than balancing-start threshold x ("N" in S12), step S13 is skipped without executing the balancing process.

Control circuit 12 compares voltage difference ΔV and internal short-circuit detection threshold (x+y) (S14). Internal short-circuit detection threshold (x+y) is a value obtained by adding an offset value y to balancing-start threshold x. In accordance with the embodiment, the absolute value of internal short-circuit detection threshold (x+y) is greater than the absolute value of balancing-start threshold x. Internal short-circuit detection threshold (x+y) is set to a value within the range of the following relation (1).

$$(\text{Maximum value of voltage difference } \Delta V \text{ naturally occurring in normal use}) < (x+y) < (\text{Voltage defference } \Delta V \text{ at the boundary of the region not ensuring cell safety}) \tag{1}$$

That is, internal short-circuit detection threshold (x+y) is greater than the maximum value of voltage difference ΔV naturally occurring in normal use and less than voltage difference ΔV at the boundary of the region not ensuring cell safety.

"Voltage difference ΔV at the boundary of the region not ensuring cell safety" may be determined based on the results of experiments or simulations to be, for example, voltage difference ΔV at the boundary between the short-circuit progressing region and the short-circuit grown region of battery assembly 20.

Control circuit 12 may change offset value y according to the cell condition or the environment. When the cell condition or the environment becomes worse, control circuit 12 may accordingly decrease offset value y to decrease internal short-circuit detection threshold (x+y).

Control circuit 12 may change offset value y referring to, e.g., at least one of the temperature of cells E1-En, the voltages across cells E1-En, the SOCs of cells E1-En, and currents flowing through cells E1-En. For the voltage or the SOC of cells E1-En, it is possible to use the median value or the mean value of the respective voltages or the SOC of a normal cell.

The internal resistance of a cell tends to increase when temperature lowers. Especially when at low temperatures, the internal resistance increases significantly. When the temperature is lower, control circuit 12 may decrease offset value y accordingly. The designer may obtain the relationship between the internal resistance and the temperature of cells E1-En through experiments or simulations and create a map describing the relationship between the temperature and the offset value y so as to eliminate the influences of temperature on the internal resistance as much as possible. Control circuit 12 may determine offset value y referring to the map.

The lower the voltage or SOC of the cell, the higher the internal resistance of the cells tends to be. When the voltage or SOC of the cell decreases, control circuit 12 may decrease offset value y accordingly. The designer may obtain the relationship between the internal resistance and the voltage or SOC of cells E1-En through experiments or simulations and create a map describing the relationship between the voltage or SOC and the offset value y so as to eliminate the influences of the voltage or SOC on the internal resistance as much as possible. Control circuit 12 may determine offset value y referring to the map.

The larger the current flowing through the cells, the higher the potential risk of ignition or fuming becomes. When the current flowing through the cells increases, control circuit 12 may decrease offset value y accordingly. The designer may create a two- or three-dimensional map describing the relationship between offset value y and two or three of the three parameters, temperature, voltage (or SOC), and current. Control circuit 12 may determine offset value y referring to the two- or three-dimensional map.

When, for example, the DOD increases, control circuit 12 may decrease offset value y accordingly. For example, when battery system 1 according to the embodiment is used for a stationary electricity storage system used for back-up purposes, the DOD is small. When it is used for purposes of peak shifting, the DOD is greater.

When, for example, the SOH of the cell decreases, control circuit 12 may decrease offset value y accordingly. The lower the SOH of the cells, the more the damage is accumulated. The decreasing of internal short-circuit detection threshold (x+y) enhances safety.

When, for example, the rate of decrease of the SOHs of the cells increases, control circuit 12 may decrease offset value y accordingly. The increase in the rate of decrease of SOH is the phenomenon that tends to occur toward the end of life of the cell.

When, for example, the number of activations of overcharge protection, the number of activations of overdischarge protection, the number of activations of overcurrent protection, or the number of activations of overtemperature protection increases, control circuit 12 may decrease offset value y accordingly. The greater the number of activations of these protections, the more likely the damages to the cells accumulate. The decreasing of internal short-circuit detection threshold (x+y) enhances safety.

At step S14, if voltage difference ΔV is less than internal short-circuit detection threshold (x+y) ("N" in S14), the process moves to step S10, and battery assembly 20 is continuously used. If voltage difference ΔV exceeds internal short-circuit detection value (x+y) ("Y" in S14), control circuit 12 determines that there is an error indicating that a hazardous event has occurred, and notifies upper-level device 51 (see FIG. 1) of the error. When it is during charging or discharging, control circuit 12 causes measurement circuit 11 to turn off power line switch S1 to stop charging and discharging (S15).

Upper-level device 51 displays an error message on user interface (UI) 52. Then the user contacts the manufacturer or the retail store to call a service technician. When battery system 1 is a portable battery pack, the user may bring it to a service center. The service technician disassembles battery system 1 and repairs or replaces battery assembly 20. When the voltage drop of a particular cell is due to an external short-circuit, it may be resolved by replacement of components.

As described above, the present embodiment detects a sign of internal short-circuit in a cell by utilizing the relationship between the voltage drop rate α in the balancing process (voltage variation correction capability) and the increasing rate β of voltage difference ΔV due to a micro short-circuit. When the condition α < β is met, the balancing process is no longer able to reduce voltage difference ΔV.

The present embodiment easily detects the condition α < β in which the balancing process does not take effect by using internal short-circuit detection threshold (x+y) which is obtained by adding offset value y to balancing-start threshold x, and stops using battery system 1 before entering the internal short-circuit condition. Moreover, by changing offset value y according to the condition of the cells and the environment, the influences of the condition of the cells and the environment on the determination of internal short-circuit can be eliminated as much as possible.

Hereinabove, the present disclosure has been described with reference to embodiments. It should be understood that the embodiments are merely illustrative examples. A person skilled in the art will understand that various changes and modifications of elements and combinations of processes are possible herein, and such changes and modifications are also within the scope of the present disclosure.

For example, in the above-described embodiment, battery system 1 is prohibited from being used when voltage difference ΔV exceeds internal short-circuit detection threshold (x+y). However, battery system 1 may be used temporarily prohibited even when voltage difference ΔV exceeds internal short-circuit detection threshold (x+y) at the first time. Then battery system 1 may be permanently prohibited from being used when voltage difference ΔV exceeds internal short-circuit detection threshold (x+y) at the second time.

The embodiment may be specified by the following items.

Aspect 1

A battery management device (10) including:

a measurement circuit (11) connected, with a plurality of voltage measurement lines, to respective nodes of a plurality of cells (E1-En) connected in series to one another, the measurement circuit (11) being configured to measure respective voltages across the plurality of cells (E1-En);
a plurality of discharge circuits (Sd1-Sdn, R1-Rn), each of the plurality of discharge circuits (Sd1-Sdn, R1-Rn) being connected to corresponding two adjacent voltage measurement lines of the plurality of voltage measurement lines and being configured to be connected in parallel to a corresponding cell of the plurality of cells (E1-En); and
a control circuit (12) configured to execute a balancing process of balancing the plurality of cells (E1-En) by controlling the plurality of discharge circuits (Sd1-Sdn, R1-Rn) based on the respective voltages across the plurality of cells (E1-En) measured by the measurement circuit (11), wherein
the control circuit (12) is configured to:

execute the balancing process when a variation of the respective voltages across the plurality of cells (E1-En) exceeds a first threshold; and
determine that an error occurs when the variation of the respective voltages across the plurality of cells (E1-En) exceeds a second threshold obtained by adding an offset value to the first threshold.

This configuration allows a sign of internal short-circuit in cells (E1-En) to be easily detected.

Aspect 2

A battery management device (10) according to aspect 1, wherein the second threshold is a voltage difference lower than a region not to ensure safety of the cells (E1-En).

This configuration stops the use of battery assembly (20) before entering the dangerous region.

Aspect 3

A battery management device (10) according to aspect 1, wherein the control circuit (12) is configured to change the offset value based on at least one of a temperature of the plurality of cells (E1-En), the respective voltages across the plurality of cells (E1-En), SOCs (States of Charge) of the plurality of cells (E1-En), and currents flowing through the plurality of cells (E1-En).

This configuration eliminates the influences of temperature, voltage, SOC, and current, on detecting a sign of internal short-circuit.

Aspect 4

A battery management device (10) according to aspect 1, wherein, the control circuit (12) is configured to decrease the offset value as SOHs (States of Health) of the plurality of cells (E1-En) decreases.

This configuration facilitates detecting a sign of internal short-circuit of a cell undergoing deterioration and increase safety.

Aspect 5

A battery management device (10) according to claim 1, wherein the variation of the respective voltages across the plurality of cells (E1-En) is defined by a difference between a maximum voltage and a minimum voltage of the respective voltages across the plurality of cells (E1-En), a difference between the minimum voltage and a mean voltage value of the respective voltages across the plurality of cells (E1-En), or a difference between the minimum voltage and a median voltage value of the respective voltages across the plurality of cells (E1-En).

This configuration allows the voltage variation between cells (E1-En) to be accurately determined.

Aspect 6

A battery system including:

a battery assembly (20) including a plurality of cells (E1-En) connected in series to one another; and
a battery management device (10) according to any one of aspects 1 to 5.

This configuration provides a battery system (1) that can easily detect a sign of internal short-circuit in cells (E1-En).

Aspect 7

A battery management method including:

measuring respective voltages across a plurality of cells (E1-En) connected in series to one another;
executing a balancing process of balancing the plurality of cells (E1-En) by controlling a plurality of discharge circuits (Sd1-Sdn, R1-Rn) connected in parallel to the plurality of cells (E1-En) based on respective voltages across the plurality of cells (E1-En) when a variation of the respective voltages across the plurality of cells (E1-En) exceeds a first threshold; and
determining that an error occurs when the variation of the respective voltages across the plurality of cells (E1-En) exceeds a second threshold obtained by adding an offset value to the first threshold.

This method allows a sign of internal short-circuit in cells (E1-En) to be easily detected.

Aspect 8

A battery management program causing a computer to execute:

a process of executing an balancing process of balancing a plurality of cells (E1-En) connected in series to one another by controlling a plurality of discharge circuits (Sd1-Sdn, R1-Rn) connected in parallel to the plurality of cells (E1-En) based on respective voltages across the plurality of cells (E1-En) when a variation of the respective voltages across the plurality of cells (E1-En) exceeds a first threshold; and
a process of determining that an error occurs when the variation of the respective voltages across the plurality of cells (E1-En) exceeds a second threshold obtained by adding an offset value to the first threshold.

This program allows a sign of internal short-circuit in cells (E1-En) to be easily detected.

REFERENCE MARKS IN THE DRAWINGS

1 battery system
2 load
20 battery assembly
E1-En cell
10 battery management device
11 measurement circuit
12 control circuit
Rs shunt resistor
T1 thermistor
Q1-Q2 transistor
S1 power line switch
R1-Rn discharge resistor
Sd1-Sdn discharge switch

**Claims**

1. A battery management device comprising:

   a measurement circuit connected, with a plurality of voltage measurement lines, to respective nodes of a plurality of cells connected in series to one another, the measurement circuit being configured to measure respective voltages across the plurality of cells;
   a plurality of discharge circuits, each of the plurality of discharge circuits being connected to corresponding two adjacent voltage measurement lines of the plurality of voltage measurement lines and being configured to be connected in parallel to a corresponding cell of the plurality of cells; and
   a control circuit configured to execute a balancing process of balancing the plurality of cells by controlling the plurality of discharge circuits based on the respective voltages across the plurality of cells measured by the measurement circuit, wherein
   the control circuit is configured to:

      execute the balancing process when a variation of the respective voltages across the plurality of cells exceeds a first threshold; and
      determine that an error occurs when the variation of the respective voltages across the plurality of cells exceeds a second threshold obtained by adding an offset value to the first threshold.

2. The battery management device according to claim 1, wherein the second threshold is a voltage difference lower than a region not to ensure safety of the cells.

3. The battery management device according to claim 1, wherein the control circuit is configured to change the offset value based on at least one of a temperature of the plurality of cells, the respective voltages across the plurality of cells, SOCs (States of Charge) of the plurality of cells, and currents flowing through the plurality of cells.

4. The battery management device according to claim 1, wherein, the control circuit is configured to decrease the offset value as SOHs (States of Health) of the plurality of cells decreases.

5. The battery management device according to claim 1, wherein the variation of the respective voltages across the plurality of cells is defined by a difference between a maximum voltage and a minimum voltage of the respective voltages across the plurality of cells, a difference between the minimum voltage and a mean voltage value of the respective voltages across the plurality of cells, or a difference between the minimum voltage and a median voltage value of the respective voltages across the plurality of cells.

6. A battery system comprising:

   a battery assembly including a plurality of cells connected in series to one another; and
   a battery management device according to any one of claims 1 to 5.

7. A battery management method comprising:

   measuring respective voltages across a plurality of cells connected in series to one another;
   executing a balancing process of balancing the plurality of cells by controlling a plurality of discharge circuits connected in parallel to the plurality of cells based on respective voltages across the plurality of cells when a variation of the respective voltages across the plurality of cells exceeds a first threshold; and
   determining that an error occurs when the variation of the respective voltages across the plurality of cells exceeds a second threshold obtained by adding an offset value to the first threshold.

8. A battery management program causing a computer to execute:

   a process of executing a balancing process of balancing a plurality of cells connected in series to one another by controlling a plurality of discharge circuits connected in parallel to the plurality of cells based on respective voltages across the plurality of cells when a variation of the respective voltages across the plurality of cells exceeds a first threshold; and
   a process of determining that an error occurs when the variation of the respective voltages across the plurality of cells exceeds a second threshold obtained by adding an offset value to the first threshold.

# FIG. 1

# FIG. 2

Inner Resistance

Normal Cell

Precipitate
Difference Increase

Abnormal Cell

Precipitate Increase
Short-Circuit

Voltage Difference ΔV between Cells

| Short-Circuit Non-Occurrence Region $\alpha > \beta$ | Short-Circuit Progressing Region $\alpha < \beta$ | Short-Circuit Grown Region $\alpha << \beta$ |

# FIG. 3

```
                    ┌─────────────────────────┐
                    │          Start          │
                    └─────────────────────────┘
                                 │
    ┌────────────────────────────┤
    │       ┌─────────────────────────────────────┐
    │  S10  │       Measure Voltages of Cells      │
    │       └─────────────────────────────────────┘
    │                            │
    │       ┌─────────────────────────────────────┐
    │  S11  │   Calculate Voltage Difference ΔV    │
    │       │            Between Cells             │
    │       └─────────────────────────────────────┘
    │                            │
    │  S12                  ◇ΔV>x◇              N ──┐
    │                            │ Y                │
    │       ┌─────────────────────────────────────┐│
    │  S13  │       Execute Balancing Process      ││
    │       └─────────────────────────────────────┘│
    │                            │◄────────────────┘
    │  S14   N ──◇      ΔV>(x+y)      ◇
    └────────────┘               │ Y
                    ┌─────────────────────────────────────┐
               S15  │     Stop Charging and Discharging     │
                    │             Notice Error              │
                    └─────────────────────────────────────┘
                                 │
                    ┌─────────────────────────┐
                    │      Repair, Replace     │
                    └─────────────────────────┘
```

## INTERNATIONAL SEARCH REPORT

| | International application No. |
|---|---|
| | **PCT/JP2024/025504** |

**A. CLASSIFICATION OF SUBJECT MATTER**

*H02J 7/02*(2016.01)i; *H01M 10/44*(2006.01)i; *H01M 10/48*(2006.01)i
FI:  H02J7/02 H; H01M10/44 P; H01M10/48 P

According to International Patent Classification (IPC) or to both national classification and IPC

**B. FIELDS SEARCHED**

Minimum documentation searched (classification system followed by classification symbols)

H02J7/02; H01M10/44; H01M10/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-027274 A (SHIN-KOBE ELECTRIC MACHINERY CO., LTD.) 04 February 2013 (2013-02-04) | 1-2, 5-8 |
| | paragraphs [0016]-[0017], [0020], [0044]-[0049], [0053]-[0054], fig. 1-2, 9 | |
| Y | | 3 |
| A | | 4 |
| Y | JP 2002-334726 A (NISSAN MOTOR CO., LTD.) 22 November 2002 (2002-11-22) | 3 |
| | paragraphs [0003]-[0006], [0022]-[0026], [0036], fig. 2-4 | |
| A | JP 2023-030692 A (HONDA MOTOR CO., LTD.) 08 March 2023 (2023-03-08) | 1-8 |
| | entire text, all drawings | |
| A | JP 2020-054056 A (HITACHI CONSTRUCTION MACHINERY CO., LTD.) 02 April 2020 (2020-04-02) | 1-8 |
| | entire text, all drawings | |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| | International application No. |
|---|---|
| | **PCT/JP2024/025504** |

### C. DOCUMENTS CONSIDERED TO BE RELEVANT

| Category* | Citation of document, with indication, where appropriate, of the relevant passages | Relevant to claim No. |
|---|---|---|
| A | JP 2011-155825 A (SB LIMOTIVE CO., LTD.) 11 August 2011 (2011-08-11) entire text, all drawings | 1-8 |

Form PCT/ISA/210 (second sheet) (July 2022)

## INTERNATIONAL SEARCH REPORT
**Information on patent family members**

International application No.

**PCT/JP2024/025504**

| Patent document cited in search report | | | Publication date (day/month/year) | Patent family member(s) | | | Publication date (day/month/year) |
|---|---|---|---|---|---|---|---|
| JP | 2013-027274 | A | 04 February 2013 | (Family: none) | | | |
| JP | 2002-334726 | A | 22 November 2002 | (Family: none) | | | |
| JP | 2023-030692 | A | 08 March 2023 | US | 2023/0058220 | A1 | |
| | | | | entire text, all drawings | | | |
| | | | | CN | 115923588 | A | |
| JP | 2020-054056 | A | 02 April 2020 | (Family: none) | | | |
| JP | 2011-155825 | A | 11 August 2011 | US | 2011/0181246 | A1 | |
| | | | | entire text, all drawings | | | |
| | | | | EP | 2348599 | A1 | |
| | | | | CN | 102136743 | A | |
| | | | | KR | 10-2011-0087565 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20021889 A